Europäisches Patentamt

European Patent Office

Office européen des brevets

(11) Publication number: **0 435 174 A2**

# EUROPEAN PATENT APPLICATION

(21) Application number: 90124956.5

(22) Date of filing: 20.12.90

(51) Int. Cl.5: **G06F 15/64**

(30) Priority: 25.12.89 JP 336008/89

(43) Date of publication of application:
03.07.91 Bulletin 91/27

(84) Designated Contracting States:
DE FR GB

(71) Applicant: Kabushiki Kaisha Toshiba
72, Horikawa-cho Saiwai-ku
Kawasaki-shi(JP)

(72) Inventor: Miura, Kunihiko, c/o Intellectual
Property Div.
Kabushiki Kaisha Toshiba, 1-1 Shibaura
1-chome
Minato-ku, Tokyo 105(JP)
Inventor: Maeda, Michio, c/o Intellectual
Property Division
Kabushiki Kaisha Toshiba, 1-1 Shibaura
1-chome
Minato-ku, Tokyo 105(JP)
Inventor: Hasegawa, Haruyoshi, c/o
Intellectual Property Div
Kabushiki Kaisha Toshiba, 1-1 Shibaura
1-chome
Minato-ku, Tokyo 105(JP)
Inventor: Nakamura, Hajime, c/o Intellectual
Property Div.
Kabushiki Kaisha Toshiba, 1-1 Shibaura
1-chome
Minato-ku, Tokyo 105(JP)

(74) Representative: Henkel, Feiler, Hänzel &
Partner
Möhlstrasse 37
W-8000 München 80(DE)

(54) **Image forming/storing apparatus which can store image data and can efficiently perform document filing.**

(57) Image data is converted into digital data and is read by a scanner (41). The digital data read by the scanner (41) is stored in an optical disk (233). Retrieval data (802, 805) representing the storage position or the like of the data stored in the optical disk (233) is also recorded in the optical disk (233). In addition, paper (P) on which abstract image data of the digital data stored in the optical disk (233) is recorded is output from a printer (43). The respective components of the invention are integrally arranged. This arrangement can simultaneously enjoy both the advantages of a paper file and an electronic file, i.e., quick data access and a large storage capacity. More specifically, a plurality of sheets of document data are replaced with at least one sheet of paper (P) on which simple abstract image data is recorded and image data stored in an optical disk (233), thus allowing easy registration and retrieval of image data of documents and enabling a great reduction in space for documents. In addition, since document retrieval is performed on the basis of paper having abstract data recorded thereon, a high data access speed, which is the advantage of a paper file, can be maintained.

EP 0 435 174 A2

F I G. 1

## IMAGE FORMING/STORING APPARATUS WHICH CAN STORE IMAGE DATA AND CAN EFFICIENTLY PERFORM DOCUMENT FILING

The present invention relates to an image forming/storing apparatus, such as a copying machine, which can store image data, e.g., document data, and can efficiently perform document filing.

Recently, a large amount of documents (images) have been processed in an office and the like, and hence spaces for storing such documents are increasingly lacking. For this reason, a filing system such as a document filing apparatus using optical disks or the like has been developed. In such a filing system, sophisticated retrieve or registration processing based on a sophisticated document editing or permanent filing system can be performed by using a high-performance display unit. However, the cost of such a filing system is very high. In addition, since such a system has various functions and requires complicated operations, document registration and retrieval take much time.

The drawbacks of the above-mentioned apparatus, therefore, are that registration or retrieval of images cannot be simply and easily performed, and the apparatus is expensive.

It is an object of the present invention to provide an inexpensive image forming/storing apparatus which allows simple, easy registration or retrieval of images.

According to the present invention, there is provided an image forming/storing apparatus comprising:

an image processing storing apparatus comprising:

means for reading image data;

means for storing the image data read by said reading means in an optical storage medium;

means for generating retrieval data for retrieving the image data stored in the optical storange medium by said causing means;

characterized by further comprising:

means for forming an abstract image by editing a plurality of image data read by said reading means and the retrieval data, generated by said generating means;

means for printing the abstract image fromed by the forming means on a recording medium;

means for extracting the retrieval data from the abstract image by reading the abstract image on the recording medium, by said reading means;

means for retrieving the image data corresponding to the retrieval data from the optical storage medium;

wherein said reading means, said storing means said generating means, said abstract image forming means, printing forming means, said extracting means, and said retrieving means are integrally formed.

This invention can be more fully understood from the following detailed description when taken in conjunction with the accompanying drawings, in which:

Fig. 1 is a block diagram showing a schematic arrangement of a copying machine of the present invention;

Fig. 2 is a schematic view showing internal structures of a scanner, printer, and optical disk unit of the copying machine in Fig. 1;

Fig. 3 is a block diagram showing a schematic arrangement of the scanner in Fig. 1;

Fig. 4 is a block diagram showing a schematic arrangement of an image processing circuit in Fig. 3;

Fig. 5A is a block diagram showing a schematic arrangement of an editing processing section in Fig. 4;

Fig. 5B is a block diagram showing a schematic arrangement of an image processing module in Fig. 1;

Fig. 6 is a view showing a structure of a page memory in Fig. 1;

Figs. 7 and 8 are views for explaining an address generating operation of an address controller in Fig. 6;

Fig. 9 is a block diagram showing a schematic arrangement of a control system of the printer in Fig. 1; and

Figs. 10A and 10B are views showing an abstract image printed out by the printer in Fig. 1.

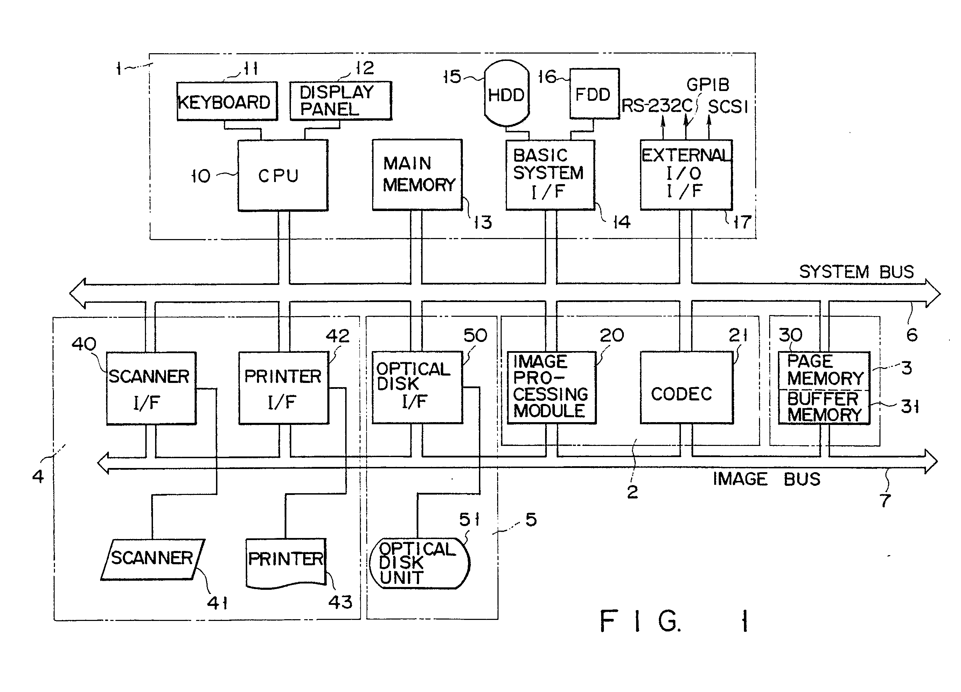

Fig. 1 shows a schematic arrangement of a copying machine as an image forming/storing apparatus according to an embodiment of the present invention.

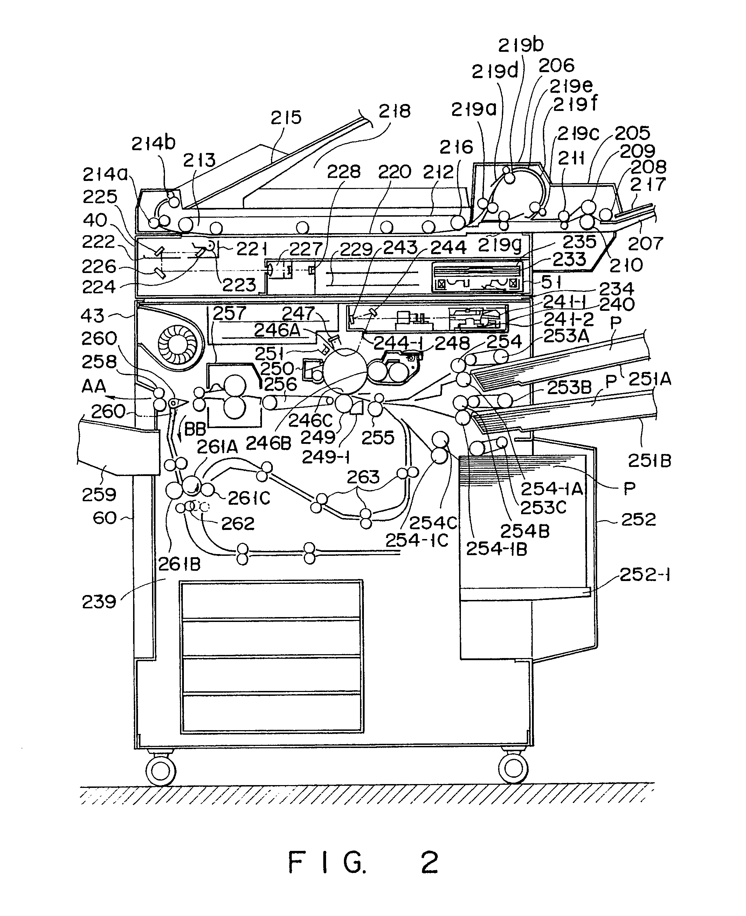

As shown in Fig. 1, the copying machine comprises a basic system section 1, an image processing section 2, a memory section 3, an I/O section 4, an image storage section 5, a system bus 6, and an image bus 7. In this copying machine, the basic system section 1, the image processing section 2, the memory section 3, the I/O section 4, the image storage section 5, the system bus 6, and the image bus 7 are integrally arranged in a main body 60 of the copying machine, as shown in Fig. 2.

The basic system section 1 shown in Fig. 1 comprises a CPU (central processing unit) 10 for performing various control operations, a keyboard 11 for outputting data, a display section 12 for displaying various states, a main memory 13 as a program storage area, a magnetic disk unit 15 as a storage unit for various data, a basic system interface 14 for interfacing a floppy disk unit 16, and an external I/O interface 17 for allowing connection with external units.

The image processing section 2 comprises an image processing module (to be described later) 20 for performing various image processing operations, and a compression/expansion circuit (CODEC) 21 for performing compression/expansion of image data.

The memory section 3 is constituted by a page memory 30 having a recording capacity corresponding to several A3 pages, and a buffer memory 31 as a temporary storage area for image data.

The I/O section 4 comprises a scanner 41 as a document reader for optically reading document data and converting it into a time-serial electrical signal, a printer 43 as an image output section for printing out image data, a scanner interface 40 for connecting the above-mentioned components to the system, and a printer interface 42.

The image storage section 5 is constituted by an optical disk unit 51 for storing various data in an optical disk (not shown), and an optical disk interface 50 for connecting the unit 51 to the system.

The system bus 6 serves as a control bus for the overall system and controls the basic system section 1, the image processing section 2, the memory section 3, the I/O section 4, and the image storage section 5. The image bus 7 serves as a bus exclusively used for image data and allows high-speed transfer of image data of the image processing section 2, the memory section 3, the I/O section 4, and the image storage section 5.

Fig. 2 is a schematic view showing internal structures of the scanner 41, the printer 43, and the optical disk unit 51 of the copying machine shown in Fig. 1.

The scanner 41 comprises a return auto document feeder (RADF) 206 and an exposure section 229 constituted by a first carriage 224, a second carriage 222, a focusing lens 227, and a CCD (charge coupled device) sensor 228.

Referring to Fig. 2, a document is placed facing down on a document glass 220. The front left side of the document glass 220 in the transverse direction serves as a center reference for positioning the document. The document is urged against the document glass 200 by a conveyor belt 212 of a convey unit section 218 of the return auto document feeder (RADF) 206. The document is illuminated by a fluorescent lamp 223, and the reflected light is focused on a surface of the CCD 228 having a plurality of light-receiving elements arranged in a row through mirrors 213, 225, and 226 and the focusing lens 227.

The first carriage 224 including the mirror 213, a light amount sensor (not shown) for detecting the light amount of the fluorescent lamp 223, and a heater for keeping the temperature of the fluorescent lamp 223 constant, and the second carriage 222 including the mirrors 225 and 226 are moved at a relative speed of 2 : 1. The first and second carriages 224 and 222 are moved from the left to the right to perform sub-scanning by means of a pulse motor (not shown) in synchronism with a read timing signal from the scanner interface 40. The speed of sub-scanning is switch accordance with a read magnification by driving a two-phase pulse motor using a 1/2-phase excitation micro step driving method. A pulse motor driver (not shown) is designed to output a current waveform for canceling the natural oscillation of the drive system especially in a low-speed range to the pulse motor.

An image of the document placed on the document glass 220 is sequentially read in units of lines in the above-described manner. An 8-bit digital data representing the density of the image is output to the scanner interface 40.

The upper and lower surfaces of a document are read by the return auto document feeder (RADF) 206 in the following manner. when a document detection switch 217 detects that a document is placed on a document feed table 207, an RADF mode is set. Documents are picked up by a pickup roller 208 from the uppermost document and are separated and conveyed one by one by a feed roller 209 and a separation roller 210 which are rotated in opposite directions. The conveyed document is aligned by aligning rollers 221 and is conveyed to the convey unit section 218.

The document is further conveyed by the conveyor belt 212 until it is brought into contact with a document stopper 213, i.e., to a read reference position. After a read operation is performed at this position in the above-described manner, the conveyor belt 212 is rotated in the reverse direction to return the document to a reverse gate 216 of a paper feed unit 205. At this time, the reverse gate 216 is pivoted to a position to convey the document to reverse rollers 219a. The document is then reversed and conveyed to aligning rollers 219g by reverse rollers 219a, 219b, and 219c through reverse guides 219d, 219e, and 219f.

After the document is aligned, it is supplied to the convey unit section 218 by the aligning rollers 219g and is conveyed to the read reference position by the conveyor belt 212. when a read operation of the lower surface is completed, the document is conveyed by the conveyor belt 212 until it reaches discharge rollers 214a. The document is then discharged by the discharge rollers 214a and 214b and is stacked on a document discharge tray 215. The upper and lower surface of documents can be continuously read by repeating the above-described operation.

The optical disk unit 51 comprises an optical disk 233, an optical disk drive motor 234, a read head 202, and an optical disk drive control section 235.

Image data is stored in the following manner. Image data read by the scanner 41 is temporarily stored in the page memory 30. The image data is then compressed by the compression/expansion circuit 21 of the image processing section 2 through the image bus 7 and is output to the optical disk unit 51 through the optical disk interface 50. The compressed image is recorded, by a head (not shown) controlled by optical disk drive control section 235, as bit data on the optical disk 233 rotated/controlled by the optical disk drive motor 234.

When image data is to be read out, data recorded at a specific position on the optical disk 233 is read out by the head in accordance with control data (retrieval data identified from an abstract image data). The image data is then expanded by the compression/expansion circuit 21 of the image processing section 2 through the image bus 7 and is temporarily stored in the page memory 30. The image data recorded in the page memory 30 is subjected to predetermined processing in the image processing module 30 and is output to the printer 43 through the image bus 7 and the printer interface 42.

The printer 43 is constituted by an image forming section 239 employing a combination of a laser optical system 240 and an electrophotographic scheme capable of forming images on the upper and lower surfaces of transfer paper (paper) P.

The image data transferred from the page memory 30 through the image bus 7 and the printer interface 42 is synchronized by an image data processing circuit (not shown) and is output from a semiconductor laser oscillator (not shown) as a laser beam 245.

The output laser beam 245 is shaped by a beam shaping optical system (not shown) constituted by, e.g., a cylindrical lens. The beam 245 is then deflected by a polygonal rotating mirror 241-1 rotated by a high-speed rotating motor 241-2 using an air bearing. The deflected laser beam 245 is reflected by mirrors 243 and 244 through an f8 lens 242 and is focused at an exposure position 246A on a photosensitive drum 246 as a spot having a necessary resolution and is scanned/exposed to form a latent image on the photosensitive drum 246. The deflected laser beam 245 is detected by a beam detector (not shown) constituted by a photodiode to be synchronized.

The following components are arranged around the photosensitive drum 246: a charger 247 for charging the surface of the photosensitive drum 246, a developing unit 248, a transfer roller 249, a cleaner 250, and a discharge lamp 251.

The photosensitive drum 246 is rotated by a drive motor (not shown) at a peripheral velocity V0. The photosensitive drum surface is charged by the charger 247 having a grid electrode and arranged to oppose the drum surface. After the latent image is formed by spot-focusing the laser beam 245 at the exposure position 246A on the charged photosensitive drum 246, the drum 26 is rotated to a developing position 246B at the velocity V0. At this position, the latent image on the photosensitive drum 246 is developed as a toner image by the developing unit 248. The photosensitive drum 246 having the toner image formed thereon is continuously rotated at the velocity V0. At a transfer position 246C, the toner image is transferred onto the transfer paper P, which is fed by a paper feed system at a predetermined timing, by using the transfer roller 249. An unnecessary toner attached to the transfer roller 249 is removed by a transfer roller cleaner 249-1.

The paper feed system comprises a means for selectively feeding the transfer paper P as an image formation medium from two cassettes 251A and 251B and from a large-capacity feeder 252, and a reverse paper feed section for feeding the transfer paper P again so as to form an image on the second surface (lower surface) of the transfer paper P after the transfer paper P having an image formed on its first surface (upper surface) is reversed.

Feeding of the transfer paper P in the two cassettes 251A and 251B and in the large-capacity feeder 252 is selectively started by, e.g., a pickup roller 253A (253B or 253C), and only one sheet of the transfer paper P is separated and fed by a feed roller 254A (254B or 254C) and a separation roller 254-1A (254-1B or 254-1C). The transfer paper P is then conveyed to register rollers 255 and is supplied to the transfer section at a predetermined timing. An elevator 252-1 of the large-capacity feeder 252 is vertically moved in accordance with the number of sheets of the transfer paper P in such a manner that the level of the transfer paper P at the position of the paper feed section is kept substantially constant.

On the downstream side of the transfer roller 249, the following components are arranged: a paper convey mechanism 256, a fixing unit 257, a path switching guide 260 for switching paper paths to discharge the image-formed transfer paper P outside the apparatus or to guide it to the reverse paper feed section, and paper discharge rollers 258. The path switching guide 260 changes the path along which the transfer paper P is conveyed from the fixing unit 257 in directions AA and BB in Fig. 2. For example, when the path switching guide 260 is set in a state shown in Fig. 2, the transfer paper P advances along the path AA and is discharged onto a discharge tray 259 through the paper discharge rollers 258.

Formation of images on the first and second surfaces (upper and lower surfaces) of the transfer paper P will be described in detail below. After a toner image corresponding to image data, e.g., cover data of an abstract image data is transferred onto the first surface (upper surface) of the transfer paper P by the transfer roller 249 through the above-described image formation process, the transfer paper P is conveyed to the fixing unit 257 by the paper convey mechanism 256, and the toner image is fixed to the transfer paper P. The path switching guide 260 is pivoted counterclockwise (indicated by a dotted line). As a result, the transfer paper P which passes through the fixing unit 257 is conveyed to the path BB.

The transfer paper P passes between reverse rollers 261A and 261B and is conveyed to reverse grip rollers 262. when the trailing end of the transfer paper P passes through the reverse rollers 261A and 261B, the grip rollers 262 stop rotating and pivot clockwise while clamping the transfer paper P (indicated by dotted lines) and are rotated in the reverse direction. The transfer paper P is conveyed to a position between the reverse rollers 261A and 261B. The transfer paper P then passes through convey rollers 263 and reaches the register rollers 255 so as to be fed to the transfer position 246C at a predetermined timing.

At this time, a toner image corresponding to image data, e.g., lower surface data of the abstract image data, is formed on the second surface (lower surface) of the transfer paper P. The transfer paper P is then conveyed to the fixing unit 257 by the paper convey mechanism 256. As a result, the toner image is fixed onto the second surface (lower surface) of the transfer paper P. The path switching guide 260 is pivoted clockwise (indicated by Fig. 2) so that the transfer paper P advances along the path AA and is discharged onto the discharge tray 259 by the discharge rollers 258.

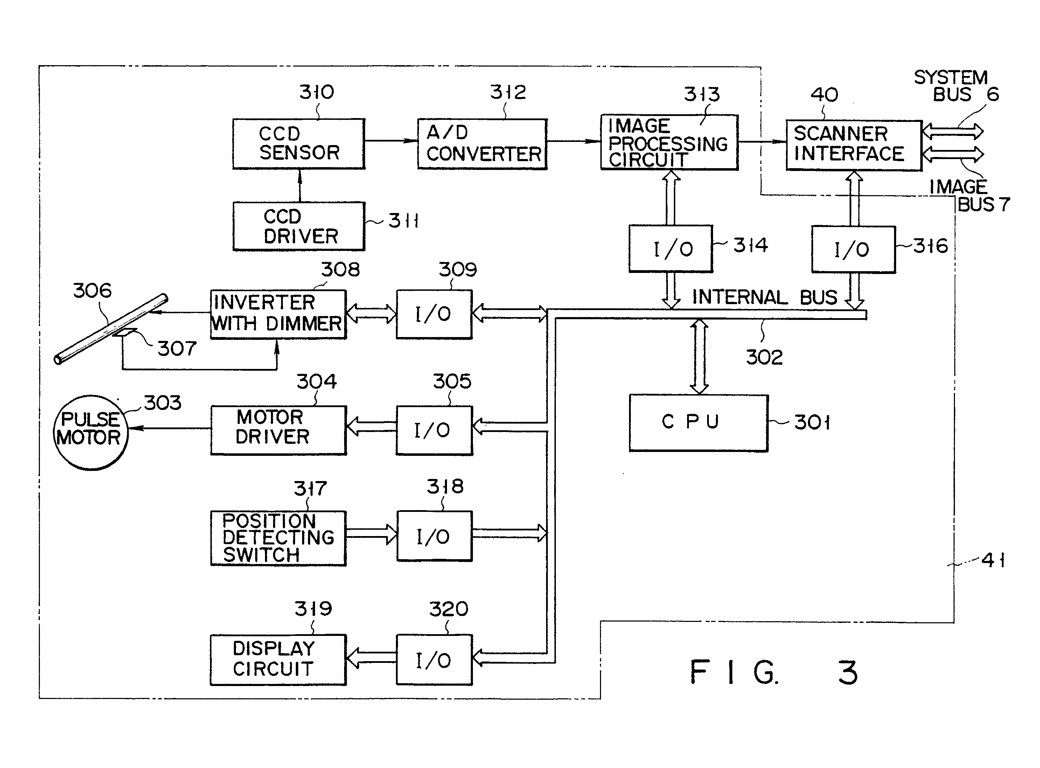

Fig. 3 is a block diagram showing a schematic arrangement of the scanner 41 in Fig. 1. More specifically, a CPU 301 controls the overall operation of the scanner 41. An internal bus 302 is connected to the CPU 301. A motor driver 304 is connected to the CPU 301 through the internal bus 302 and an I/O interface 305. A pulse motor 303 for read scanning is driven/controlled by the motor driver 304.

An inverter 308 with a dimmer is connected to the internal bus 302 through an I/O interface 309. The brightness of a fluorescent lamp 306 is controlled by the inverter 308 on the basis of a signal from a dimming sensor 307. In addition, an image processing circuit 313 and the scanner interface 40 are connected to the internal bus 302 through I/O interfaces 314 and 316, respectively.

A CCD sensor 310 as a photoelectric converter is controlled by a CCD driver 311. The CCD sensor 310 is designed such that light reflected by a document surface upon radiation by the fluorescent lamp 306 is focused on the CCD sensor 310 through, e.g., a focusing lens (not shown), and corresponding image of the document is photoelectrically converted by the CCD sensor 310. The photoelectrically converted image data is sequentially extracted in units of lines in accordance with the intensity of optical data.

An output from the CCD sensor 310, i.e., an image signal, is converted from an analog amount to a digital amount by an A/D converter 312 and is output to the scanner interface 40.

A position detecting switch 317 for detecting the position of a read/scan portion is connected to the internal bus 302 through an I/O interface 318. Furthermore, a display circuit 319 is connected to the internal bus 302 through an I/O interface 320.

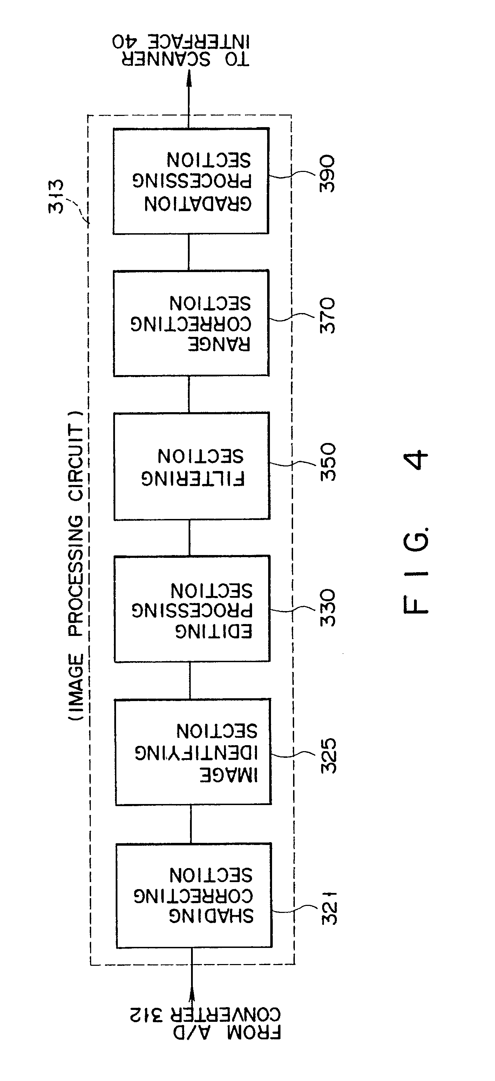

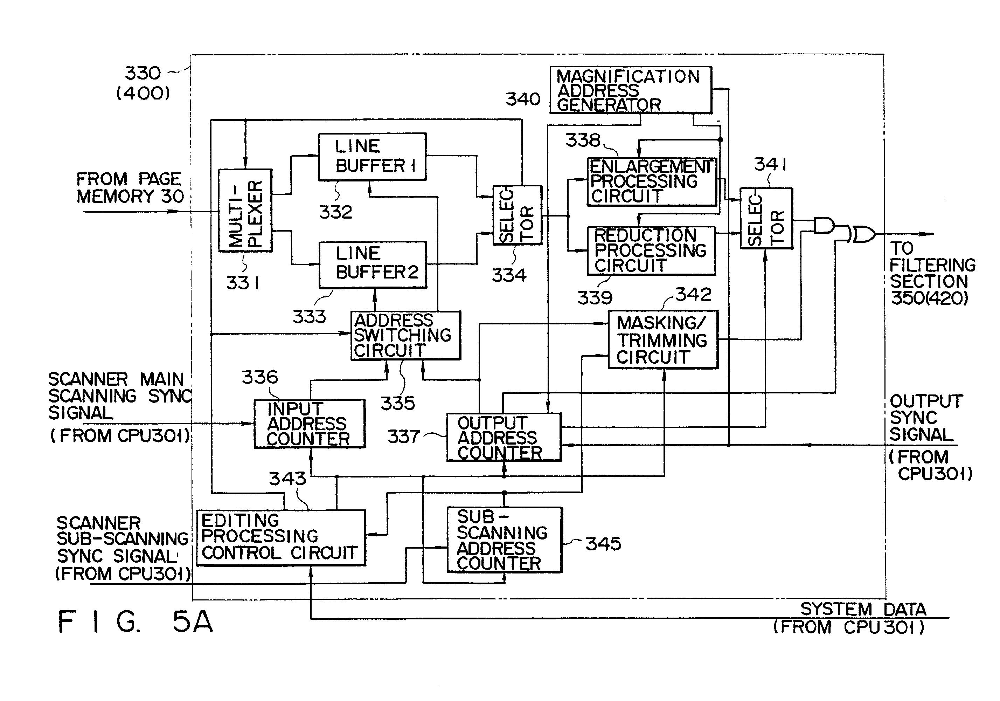

Fig. 4 is a block diagram showing a schematic arrangement of the image processing circuit 313 in Fig. 3.

The image processing circuit 313 is designed to receive image data as digital data obtained by the A/D converter 312 and perform shading correction processing of the image data in a shading correcting section 321. If the shading-corrected image data is an abstract image data having identification data of an image recorded in the optical disk 233, an image identifying section 325 extracts bar code data recorded at a predetermined position of the abstract image and outputs it to the CPU 301. The CPU 301 analyzes the bar code data and outputs an image data identification code for identifying image data stored in the optical disk 233.

If the image data is abstract image data, image processing described later is not performed, and image data read by the scanner 41 is not transferred to the basic system section 1 side. If the image is not an abstract image, no bar code data is extracted by the image identifying section 325, and the image data is transferred to the basic system section 1 side in synchronism with a predetermined clock after the image data is subjected to the following processing.

The shading-corrected image data is subjected to image editing processing, e.g., enlargement/reduction, movement, trimming/masking, black-and-white inversion, and mirror image processing in accordance with a command from the CPU 301. Thereafter, this image data is subjected to gradation processing corresponding to the characteristic features of the image data and is converted into image corresponding to the output level of an output portion of, e.g., the printer 43. The image data is then output, through the printer interface 42, to an output unit such as the printer 43 or to the page memory 30 so as to be stored in a storage processing section such as the optical disk unit 51.

An editing processing section 330 of the image processing circuit 313 receives the image data which is output from the shading correcting section 321 in synchronism with a main scanning sync signal from the scanner 41, and executes editing processing designated by the CPU 301.

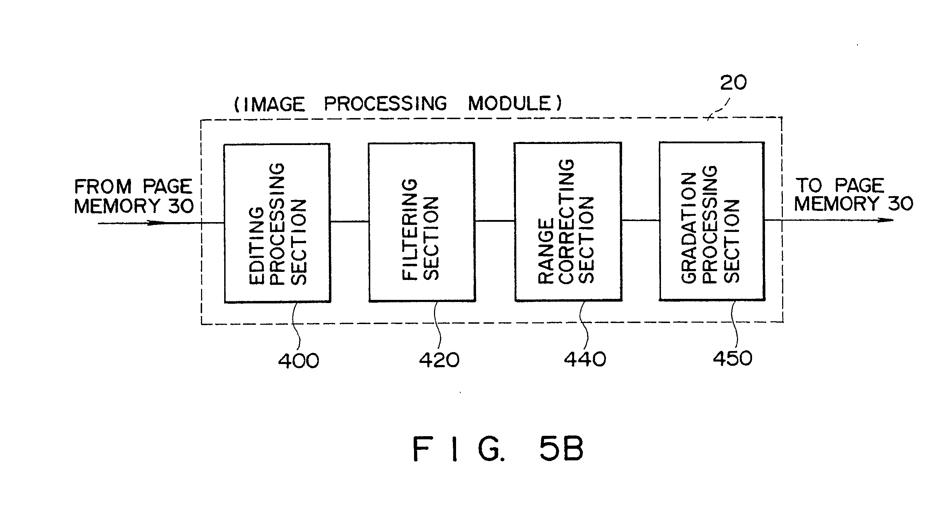

Fig. 5A is a block diagram showing a schematic arrangement of the editing processing section 330 in Fig. 4. An editing processing control circuit 343 analyzes an editing processing command from the CPU 301 and controls the respective components in the editing processing section 330 in accordance with the editing processing command. A multiplexer 331 selectively switches output 8-bit image data in units of lines and outputs them to line buffers 332 and 333. For example, even-numbered lines are output to the line buffer 332, whereas odd-numbered lines are output to the line buffer 333.

An output address counter 336 is an up/down counter for sequentially counting up/down in synchronism with a main scanning sync signal from the scanner 41. An output address counter 337 is an up/down counter for sequentially counting up/down image data in synchronism with an output sync signal from the basic system section 1. An address switching circuit 335 selects and switches outputs from the output address counters 336 and 337 in units of lines. If, for example, output data is data of an even-numbered line, the address switching circuit 335 outputs an output from the output address counter 336 to the line buffer 332, and outputs an output from the output address counter 337 to the line buffer 333. In contrast to this, if the output data is data of an odd-numbered line, an output from the output address counter 336 is output to the line buffer 333, and an output from the output address counter 337 is supplied the line buffer 332.

In this case, movement processing is performed in the main scanning direction by changing the initial values of the output and output address counters 336 and 337. Movement processing in the sub-scanning direction is performed by shifting the output timing of image data under the control of the CPU 301. Mirror image formation processing is performed by switching count up/down operations of the output address counter 337 when its count reaches a predetermined value within a line. Repetition processing is performed by causing the output address counter 337 to repeatedly output addresses in a predetermined range within a line.

Each of the line buffers 332 and 333 is constituted by a one-line memory for temporarily storing image data output from the shading correcting section 321. A selector 334 selectively switches image data in the line buffers 332 and 333 in units of lines (e.g., even-numbered lines are stored in the line buffer 332, and odd-numbered lines are stored in the line buffer 333) so as to output them to an enlargement processing circuit 338 and to a reduction processing circuit 339. with this arrangement, data which is delayed from each other by an amount corresponding to one line is output from the line buffers 332 and 333. A magnification address generator 340 calculates a magnification address corresponding to a given magnification and outputs it to the enlargement processing circuit 338 and the reduction processing circuit 339.

The magnification address generator 340 also outputs a control signal for stopping a counter up/down operation to the output address counter 337 when an enlargement magnification address reaches a specific value corresponding to the given magnification. The enlargement processing circuit 338 performs enlargement processing using linear interpolation. The reduction processing circuit 339 performs reduction processing by using a projection method. A selector 341 selects an enlargement processing result output from the enlargement processing circuit 338 when the given magnification is larger than 1. If the magnification is 1 or less, the selector 341 selects a reduction processing result output from the reduction processing circuit 339. Enlargement and reduction are performed in only the main scanning direction of an image. A change in magnification of an image in the sub-scanning direction is performed by changing the moving speed of the carriage of the scanner 41.

A masking/trimming circuit 342 has a bit plane memory corresponding to one page in which one pixel consists of two bits. The circuit 342 outputs two-bit data corresponding to pixels. Bit 1 is masking/trimming data, and bit 0 is inverse data for inversion from a negative image to a positive image. Masking/trimming processing is performed by calculating an AND of the data of bit 1 of the bit plane memory and image data. Inversion from a negative image to a positive image is performed by calculating an exclusive OR of the data of the bit 0 of bit plane memory and image data. Owing to the bit plane memory, a plurality of areas with arbitrary shapes can be designated. A bit plane is written by the CPU 301 upon a predetermined operation.

A filtering section 350 in Fig. 4 receives image data output from the editing processing section 330 and performs, e.g., 3 x 3 filtering for it. A weighting coefficient is a variable output from the control section. Edge enhancement processing and smoothing processing are performed by changing the weighting coefficient.

A range correcting section 370 serves to correct the dynamic range of image densities. The section 370 receives maximum and minimum values at a local area which are output from a maximum/minimum value detector of a gradation processing section 390 (to be described later). This operation is repeatedly performed a number of times corresponding to several ten lines so as to detect maximum and minimum values corresponding to several tens lines. The output data is corrected to set these maximum and minimum values to be the maximum and minimum values of the output level.

The gradation processing section 390 receives image data output from the range correcting section 370 and obtains characteristic data of a maximum density difference at a local area including a target pixel. The type of an image is discriminated on the basis of this characteristic data. If it is photographic data, pseudo-gradation processing using an error diffusion method is performed. If it is a character image, dynamic binarization is performed in accordance with the density of the local area.

Image data converted into data having the output level of the printer by the gradation processing section 390 is output to an output unit such as the printer or to the page memory to be stored in synchronism with an output sync signal from the basic system section 1.

Editing processing, filtering, range correction, and gradation processing can be selectively performed under the control of the CPU 301.

Fig. 5B is a block diagram showing a schematic arrangement of the image processing module 20 in Fig. 1.

When image data stored in the optical disk 233 of the optical disk unit 51 is output to an output unit such as the printer 43, the image processing module 20 is used to perform image processing of this image data. The image data from the optical disk 51 is supplied to the compression/expansion circuit 21 in units of lines through the image bus 7. A compression/expansion circuit 21 performs expansion processing in units of lines so that the extended image data is written in the page memory 30 in units of lines through the image bus 7. In this manner, one-page image data is written in the page memory 30.

The image processing module 20 receives the image data in the page memory 30 in units of lines and performs image editing processing, such as enlargement/ reduction processing, trimming/masking, black-and-white reversion, or mirror image processing, in response to a command from the CPU 10. Thereafter, the image processing module 20 performs range correction and gradation processing corresponding to the characteristic features of the image represented by the image data, and converts it into image data corresponding to the output level of the printer 43 or the like. The module 20 outputs the image data to the page memory 30 in units of lines. After image processing corresponding to one page is completed, the image data is output from the page memory 30 to the printer 43 through the printer interface 42 in synchronism with a predetermined clock from the printer 43.

Since a filtering section 420, a range correcting section 440, and a gradation processing section 450 in the image processing module 20 are equivalent to the filtering section 350, the range correcting section 370, and the gradation processing section 390 in the scanner 40, respectively, a detailed description thereof will be omitted. Movement processing performed by an editing processing section 400 is also equivalent to that performed by the editing processing section 330 in the image processing circuit 313 of the scanner 40. Movement processing is performed by address control for the page memory 30 by means of address controllers (ADCs) 484 and 485 (to be described later) in the page memory 30. Note that whether to perform each of the four types of processing is determined under the control of the CPU 10 on the basis of a command from the basic system section 1.

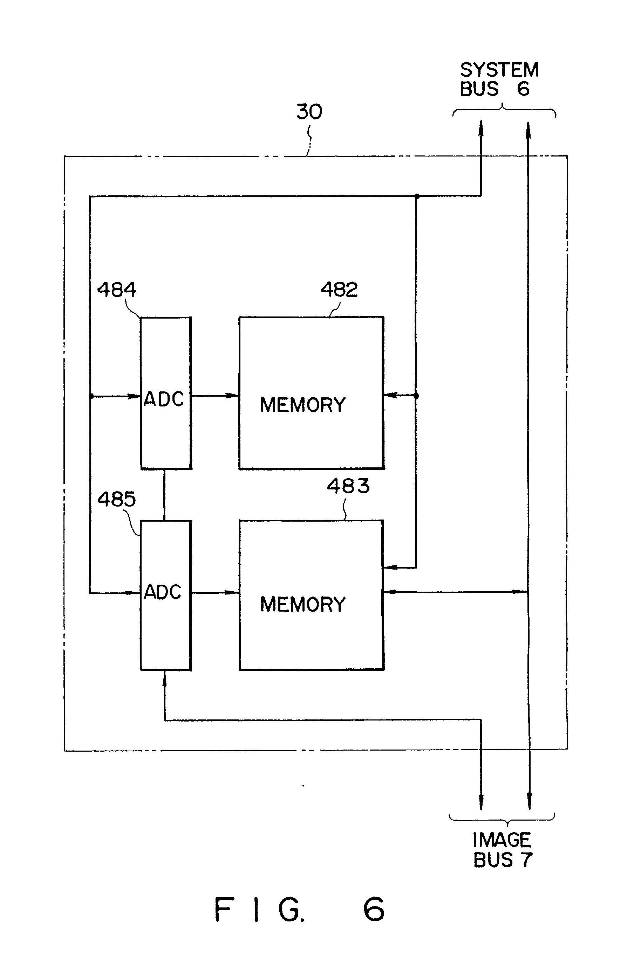

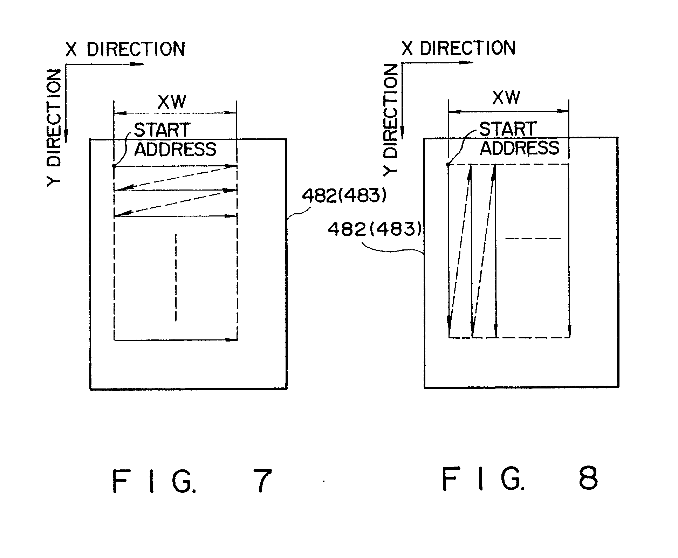

The page memory 30 has a structure shown in Fig. 6. More specifically, the page memory 30 includes memories 482 and 483 each having a capacity of at least one A3 page. The address controllers 484 and 485 are respectively provided for the memories 482 and 483. These address controllers 484 and 485 can generate various addresses. For example, they can sequentially generate addresses in the X direction in synchronism with a predetermined clock, as shown in Fig. 7. Alternatively, the address controllers 484 and 485 can sequentially generate addresses in the Y direction by changing their parameters, as shown in Fig. 8. In addition, a scanning direction is not limited to the forward direction (in which addresses are increased in value) and addresses can be generated in the reverse direction (in which addresses are decreased in value).

Furthermore, the value (step) of an address increased (decreased) at every clock output can be variously set. This step includes an X-direction step (XS) and a Y-direction step (YS). XS includes an X-direction X step (XXS) and an X-direction Y step (XYS). YS includes a Y-direction X step (YXS) and a Y-direction Y step (YYS). XXS is an address value which is counted up in the X direction at every clock of a main scanning sync signal (not shown). XYS is an address value which is counted up in the Y direction at every clock of the main scanning sync signal. In addition, YXS is an address value which is counted up in the X direction at every clock of a sub-scanning sync signal (not shown). YYS is an address value which is counted up in the Y direction at every clock of the sub-scanning sync signal.

For example, as shown in Fig. 7, the address value is sequentially counted up in the X forward direction for (XXS = +1, XYS = 0, YXS = 0, YYS = 1). For (XXS = 0, XYS = 1, YXS = 0, YYS = +1), the address value is sequentially counted up in the Y forward direction. If negative values are set, addresses are generated in the reverse direction. In addition, decimal fractions can be set. For example, if (XXS = 0.5, XYS = 0, YXS = 0, YYS = 1) are set, the address value is counted up by one in the X forward direction at every two clocks of the main scanning sync signal. For (XXS = 1, XYS = 1, YXS = 0, YYS = 1), addresses are generated at an angle of 45°. That is, addresses can be generated at an arbitrary angle by changing the preset values of XXS and XYS.

Addresses can also be generated in the form of a rhombus by changing the preset values of YXS and YYS at the same time that the preset values of XXS and XYS are changed. A scanning width (XW) per line can be variously set in accordance with a paper size, and a start address can also be changed. Memory transfer is performed between the two memories 482 and 483 respectively using the address controllers 484 and 485 capable of generating various types of addresses as described above, thus enabling image editing such as movement, rotation, changes in vertical and horizontal positions, enlargement/reduction, repetition, mirror image processing, and shading.

The two memories 482 and 483 in the page memory 30 can be accessed through both the image bus 7 and the system bus 6. The parameters of the address controllers 484 and 485 can be accessed through only the system bus 6. The address controllers 484 and 485 can be updated by read and write signals from the image bus 7 and from the system bus 6.

An operation of the page memory 30 will be described, in which image data read by the scanner 41 is stored in the optical disk 233 of the optical disk unit 51. The image data read by the scanner 41 is fetched in the memory 482 in the page memory 30 through the scanner interface 40 and the image bus 7. The image data in the memory 482 is supplied to the compression/expansion circuit 21 in units of lines through the image bus 7. The compression/expansion circuit 21 performs compression of the image data in units of lines, and sequentially writes the compressed image data in the optical disk 233 of the optical disk unit 51 in units of lines through the image bus 7. At the same time, the image data in the memory 482 is subjected to thinning reduction processing to be reduced to 1/4 and is copied in a predetermined area of the memory 483 in the page order of the document.

The 1/4 thinning reduction processing is performed as follows. when data is to be copied from the memory 482 to the memory 483, the address controller 484 increases the address value by one in the X direction at every clock of the main scanning sync signal, and increases the address value by one in the Y direction at every clock of the sub-scanning sync signal. In contrast to this, the address controller 485 increases the address values by one in the X direction at every four clocks of the main scanning sync signal, and increases the address value by one at every four clocks of the sub-scanning sync signal. In this manner, a reduction copy operation corresponding to a line ratio of 1/4 and an area ratio of 1/16 is performed.

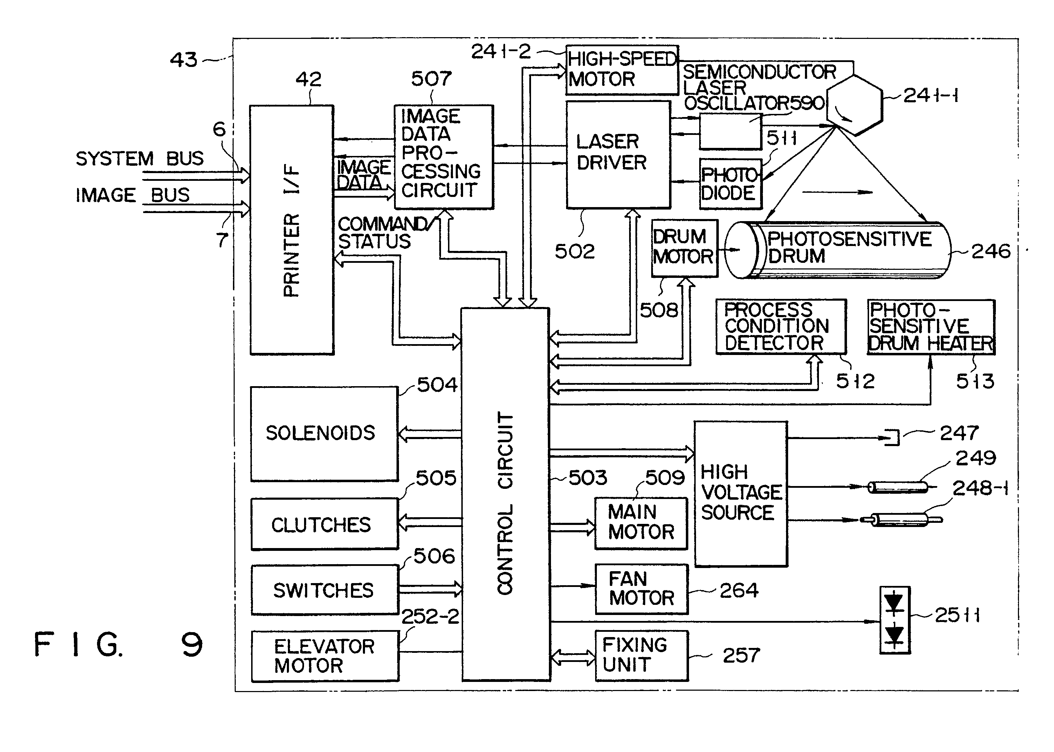

A control system of the printer 43 in Fig. 1 will be described with reference to a block diagram of Fig. 9.

As shown in Fig. 9, the printer 43 is connected to the system bus 6 and the image bus 7 through the printer interface 42.

Data transmission/reception operations to be performed through the printer interface 42 can be roughly classified into two types of operations. In one type, transmission/reception of control codes (command data from the system bus 6 and status data from the printer 43) is performed with the system bus 6. In the other type, transmission/reception of image data and accompanying sync signals is performed with the image bus 7.

Control codes, i.e., command data and status data, of the printer interface 42 are transmitted/received to/from a control circuit 503.

The control circuit 503 incorporates a microcomputer and performs main control operations for the printer 43. More specifically, the control circuit 503 interprets command data sent from the system bus 6 through the printer interface 42 and controls the respective components of the printer 43. In addition, the control circuit 503 outputs a status of the printer 43 to the system bus 6 through the printer interface 42 in response to a request from the system bus 6.

Control of the respective components of the printer 43 will be described in detail below by mainly referring to the control circuit 503.

(1) Gamma characteristic control

In an image data processing circuit 507, image data from the image bus 7 is synchronized with a sync signal from a beam detector 511 constituted by a photodiode and is converted into a laser modulation signal. The control circuit 503 can designate conversion characteristics associated with conversion from image data into a laser modulation signal with respect to the image data processing circuit 507. That is, the control circuit 503 can control the gamma characteristics of image data and of an output image (the gamma characteristics of the printer 43 are changed depending on temperatures and humidities and hence must be controlled.)

### (2) Light emission power control of laser

The control circuit 503 can forcibly cause a laser driver 502 to emit a laser and monitors the emission power of a semiconductor laser oscillator 590, thus controlling the emission power of the laser.

### (3) Motor control

The control circuit 503 performs ON/OFF control, monitoring of the rotational frequencies, and control of the rotational frequencies with respect to a high-speed motor 241-2, a drum motor 508, a main motor 509, and a fan motor 264.

### (4) High-voltage output control

The control circuit 503 performs high-voltage output control of the transfer charger 247, a developing roller 248-1, and the transfer roller 249, and can monitor outputs therefrom.

### (5) Fixing unit temperature control

The control circuit 503 monitors the temperature of a heat roller of the fixing unit 257 and controls it so as to allow a toner on transfer paper to be fixed.

### (6) Process control

The control circuit 503 causes a process condition detector 512 to detect the surface potential of the photosensitive drum 246, a toner density in the developing unit, a toner density on the photosensitive drum 246, and the temperature of the photosensitive drum 246, and performs gamma characteristic control, high-voltage output control, toner replenishment, emission power control for the laser, and control of a photosensitive drum heater 513. In addition, the control circuit 503 ON/OFF-controls a discharge lamp 2511 at a predetermined timing.

### (7) Transfer paper path control

The control circuit 503 performs selection of the paper feed cassettes 251A, 251B, and 251-2, controls rotation of the register rollers 255, controls the path switching guide 260, controls rotation of the reverse grip rollers 262, and controls various solenoids 504 and clutches 505 for rotation control in accordance with a print mode designated by the system bus 6 using data from switches 506.

### (8) Others

The control circuit 503 controls an elevator motor 252-2 to vertically move an elevator 252-1 in accordance with the number of sheets of the transfer paper P in the large-capacity feeder 252.

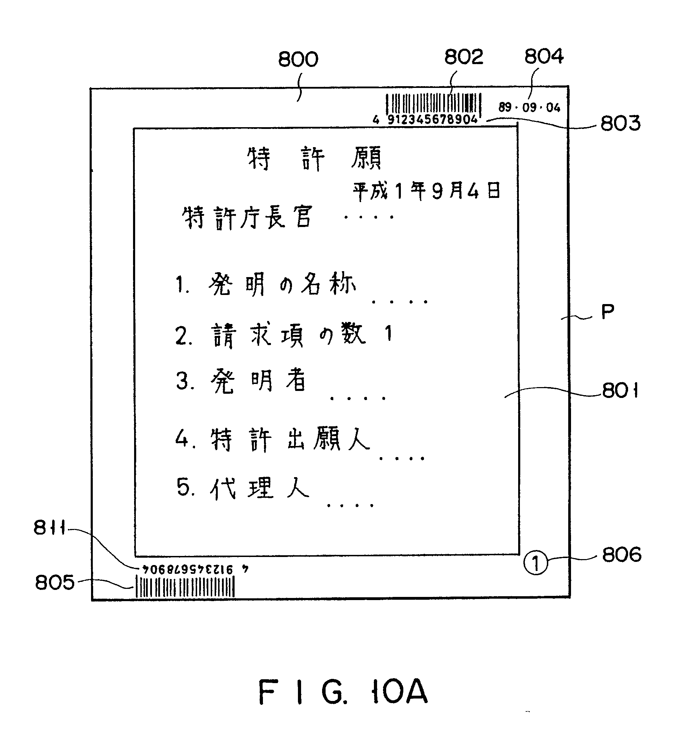

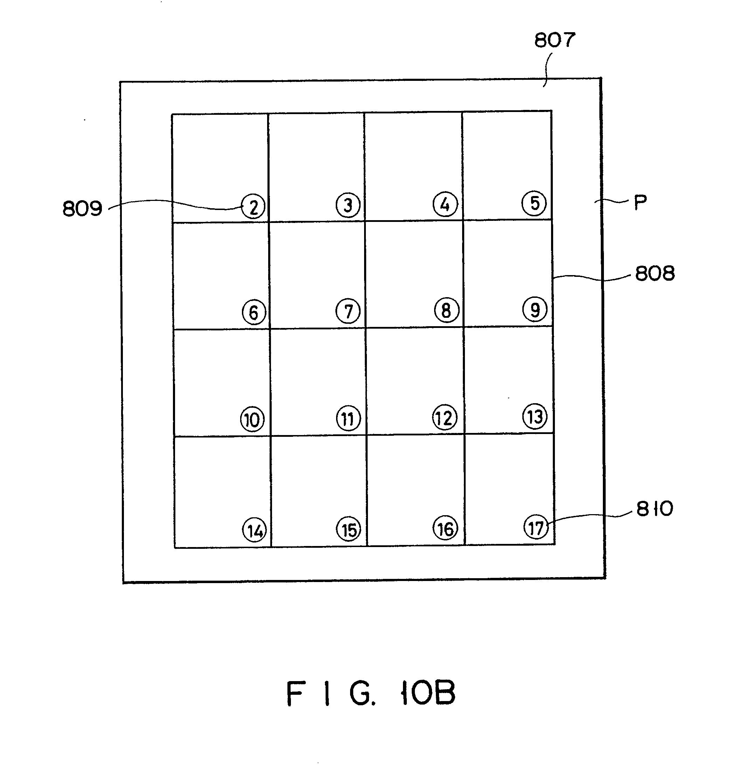

Figs. 10A and 10B are views for explaining an abstract image to be output from the printer 43 when registration is performed in a file mode in this apparatus. Fig. 10A shows the contents of a cover 800 of the abstract image. The data of the first page of one registered document is printed in a cover document printing area 801. In addition, the following data is printed: an identification symbol 802 expressed by a bar code scheme as retrieval data representing a document number required for a subsequent document retrieval operation; a document number 803 as a numeric expression of the identification symbol 802; a registration date 804 representing the date on which the document is registered as a file; a document page number 806 representing a page number of the document; and an identification symbol 805 and a document number 811 identical to the identification symbol 802 and the document number 803, respectively. Note that the identification symbol 802 (805) is printed in the bar code scheme, and the identification symbol 805 is printed in a direction opposite to the identification symbol 802.

Fig. 10B is a view for explaining contents to be printed on an inner surface 807 of the cover of the abstract image. Document data of the pages of the document except for the first page are printed in an inner surface document printing area 808 in units of pages and in a reduced state. Page numbers 809 to 810 are respectively printed on the pages.

### Claims

1. An image processing storing apparatus comprising:
   means (41) for reading image data;
   means (10, 13) for storing the image data read by said reading means (41) in an optical storage medium (51);
   means (10, 11, 12) for generating retrieval data for retrieving the image data stored in the optical storange medium (51) by said causing means (10, 13); characterized by further comprising:

means (10, 13) for forming an abstract image by editing a plurality of image data read by said reading means (41) and the retrieval data, generated by said generating means (10, 11, 12);

means (43) for printing the abstract image fromed by the forming means (10, 13) on a recording medium (P);

means (10, 13) for extracting the retrieval data from the abstract image by reading the abstract image on the recording medium (P) by said reading means (41);

means (10, 13) for retrieving the image data corresponding to the retrieval data from the optical strage medium (51);

wherein said reading means (41), said storing means (10, 13), said generating means (10, 11, 12), said abstract image forming means (10, 13), said printing means (43), said extracting means (10, 13), and said retrieving means (10, 13) are integrally formed.

F I G. 1

EP 0 435 174 A2

F I G. 2

13

F I G. 3

EP 0 435 174 A2

# FIG. 4

SHADING CORRECTING SECTION 321

IMAGE IDENTIFYING SECTION 325

EDITING PROCESSING SECTION 330

FILTERING SECTION 350

RANGE CORRECTING SECTION 370

GRADATION PROCESSING SECTION 390

FROM A/D CONVERTER 312

TO SCANNER INTERFACE 40

(IMAGE PROCESSING CIRCUIT) 313

EP 0 435 174 A2

15

F I G. 5A

F I G. 5B

SYSTEM
BUS 6

30

484

482

ADC → MEMORY

485

483

ADC → MEMORY

IMAGE
BUS 7

F I G. 6

F I G. 7

F I G. 8

FIG. 9

EP 0 435 174 A2

特　許　願

平成1年9月4日

特許庁長官　‥‥

1. 発明の名称　‥‥

2. 請求項の数　1

3. 発明者　‥‥

4. 特許出願人　‥‥

5. 代理人　‥‥

F I G. 10A

F I G. 10B